(19) Europäisches Patentamt
European Patent Office
Office européen des brevets

(11) **EP 1 731 740 B1**

(12) **FASCICULE DE BREVET EUROPEEN**

(45) Date de publication et mention
de la délivrance du brevet:
**14.10.2009 Bulletin 2009/42**

(51) Int Cl.:
**F02D 35/02** *(2006.01)*　　　**F02D 41/40** *(2006.01)*

(21) Numéro de dépôt: **06290905.6**

(22) Date de dépôt: **02.06.2006**

(54) **Système et procédé de contrôle de l'injection de carburant d'un moteur Diesel de véhicule automobile**

System und Methode zur Kraftstoffeinspritzregelung für einen Kraftfahrzeug-Dieselmotor

System and method for fuel injection control of a Diesel engine of an automotive vehicle

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.06.2005 FR 0505783**

(43) Date de publication de la demande:
**13.12.2006 Bulletin 2006/50**

(73) Titulaires:
- **PEUGEOT CITROËN AUTOMOBILES S.A.**
  **78140 Velizy Villacoublay (FR)**
- **Delphi Technologies, Inc.**
  **Troy, MI 48098 (US)**

(72) Inventeurs:
- **Souchon, Vincent**
  **75017 Paris (FR)**
- **Meissonnier, Guillaume**
  **41190 Landes le Gaulois (FR)**
- **Peron, Ludovic**
  **45740 Lailly en Val (FR)**

(74) Mandataire: **Habasque, Etienne J. Jean-François et al**
**Cabinet Lavoix**
**2, place d'Estienne d'Orves**
**75441 Paris Cedex 09 (FR)**

(56) Documents cités:
**EP-A- 0 889 220**　　　**EP-A- 1 316 704**
**WO-A-20/04022959**　　　**US-A1- 2005 005 902**

- **PATENT ABSTRACTS OF JAPAN vol. 1999, no. 10, 31 août 1999 (1999-08-31) & JP 11 125141 A (ISUZU MOTORS LTD), 11 mai 1999 (1999-05-11)**
- **PATENT ABSTRACTS OF JAPAN vol. 2003, no. 12, 5 décembre 2003 (2003-12-05) & JP 2004 100567 A (TOYOTA MOTOR CORP; TOYOTA CENTRAL RES & DEV LAB INC), 2 avril 2004 (2004-04-02)**
- **PATENT ABSTRACTS OF JAPAN vol. 2002, no. 10, 10 octobre 2002 (2002-10-10) & JP 2002 168141 A (MAZDA MOTOR CORP), 14 juin 2002 (2002-06-14)**

EP 1 731 740 B1

**Description**

La présente invention concerne un système et un procédé de contrôle du fonctionnement d'un moteur Diesel de véhicule automobile.

Plus particulièrement, la présente invention concerne un tel procédé et un tel système pour un moteur équipé de moyens d'alimentation en carburant des cylindres de celui-ci selon au moins une injection principale et une injection tardive de carburant en fonction d'une consigne prédéterminée d'intervalle d'angles vilebrequin de séparation de l'injection tardive de l'injection principale.

De manière typique, l'alimentation en carburant d'un cylindre d'un moteur Diesel de véhicule automobile, et plus particulièrement l'alimentation d'un moteur Diesel équipé d'une rampe commune d'alimentation, est fractionnée en au moins une injection principale de carburant située sensiblement au point mort haut du cycle du cylindre et une ou plusieurs injections tardives de carburant lors de la phase de détente du cycle.

L'utilisation d'une ou plusieurs de ces injections tardives a pour effet de minimiser la quantité de polluants émise par le moteur tout en conservant un niveau de bruit de combustion satisfaisant.

Or de manière typique, une variation dans les caractéristiques d'une post-injection, et tout particulièrement l'intervalle d'angles vilebrequin la séparant de l'injection principale, induit une variation importante de la quantité de polluants émise.

Toutefois, les systèmes de contrôle de l'alimentation en carburant des cylindres de l'état de la technique commandent en boucle ouverte l'injection tardive en fonction d'une consigne prédéterminée d'intervalle d'angles vilebrequin. De fait, ces systèmes ne garantissent pas que l'intervalle réel séparant ces deux injections soit égal à la consigne d'intervalle et sont d'une manière générale très sensibles à tout type de perturbation, comme le vieillissement de l'injecteur du cylindre par exemple.

Ainsi, l'émission de polluants peut rapidement se dégrader et un recalage de l'injection de carburant dans le cylindre, voire un remplacement des pièces usées, est alors régulièrement nécessaire pour garantir un niveau d'émission de polluants optimum.

Les documents WO 2004/022959, JP 2004 100 567, JP 11 125 141 et EP A 0 889 220 décrivent des systèmes de contrôle d'un moteur comportant des moyens de pilotage de l'alimentation du moteur propres à contrôler des paramètres d'alimentation en fonction de valeurs cibles prédéterminées ou en fonction de valeurs mesurées dans le moteur.

Le but de la présente invention est de résoudre les problèmes susmentionnés en proposant un système de contrôle du fonctionnement d'un moteur Diesel de véhicule automobile moins sensible aux perturbations sur les caractéristiques d'injection de carburant dans les cylindres de celui-ci.

A cet effet, la présente invention a pour objet un système de contrôle du fonctionnement d'un moteur Diesel de véhicule automobile équipé de moyens d'alimentation en carburant des cylindres de celui-ci selon au moins une injection principale et une injection tardive de carburant en fonction d'une consigne prédéterminée d'intervalle d'angles vilebrequin de séparation de l'injection tardive de l'injection principale, caractérisé en ce qu'il comprend des moyens d'estimation de l'intervalle d'angles vilebrequin séparant l'injection tardive de l'injection principale dans au moins un cylindre et des moyens de pilotage des moyens d'alimentation propres à asservir cet intervalle estimé sur la consigne d'intervalle.

Suivant des modes particuliers de réalisation, le système comporte une ou plusieurs des caractéristiques suivantes :

-   des moyens d'acquisition de la pression cylindre et de l'angle vilebrequin du au moins un cylindre, et les moyens d'estimation de l'intervalle d'angles vilebrequin séparant l'injection tardive de l'injection principale comprennent des moyens de détermination du dégagement de chaleur provoqué par la combustion du mélange dans le au moins un cylindre en fonction de la pression et de l'angle vilebrequin acquis et des moyens d'estimation de l'intervalle d'angles vilebrequin séparant l'injection tardive de l'injection principale en fonction du dégagement de chaleur déterminé ;
-   les moyens d'estimation de l'intervalle d'angles vilebrequin en fonction du dégagement de chaleur sont propres à déterminer l'angle vilebrequin ($\alpha\_peak$) du maximum (h_max) du dégagement de chaleur déterminée et un angle vilebrequin ($\alpha\_split$) de début de combustion d'un mélange issu de l'injection tardive et à calculer l'intervalle d'angles vilebrequin séparant l'injection tardive de l'injection principale en fonction de la différence entre l'angle vilebrequin ($\alpha\_split$) de début de combustion du mélange issu de l'injection tardive et l'angle ($\alpha\_peak$) du maximum (h_max) de dégagement de chaleur déterminés ;
-   les moyens d'estimation de l'intervalle d'angles vilebrequin en fonction du dégagement de chaleur sont propres à déterminer un angle vilebrequin ($\alpha\_soc$) de début de combustion d'un mélange issu de l'injection principale dans le au moins un cylindre et un angle vilebrequin ($\alpha\_split$) de début de combustion d'un mélange issu de l'injection tardive et à calculer l'intervalle d'angles vilebrequin séparant l'injection tardive de l'injection principale en fonction de la différence entre l'angle vilebrequin ($\alpha\_split$) de début de combustion du mélange issu de l'injection tardive et l'angle vilebrequin ($\alpha\_soc$) de début de combustion du mélange issu d'injection principale ;

- les moyens d'estimation de l'intervalle d'angles vilebrequin en fonction du dégagement de chaleur sont propres à déterminer des minima et des maxima dans un intervalle d'angles vilebrequin comprenant sensiblement uniquement que l'injection tardive et à détecter l'angle vilebrequin ($\alpha$_split) de début de combustion du mélange issu de l'injection tardive comme étant l'angle du minimum détecté associé au plus grand dégagement de chaleur entre ce minimum et le maximum détecté successif le plus proche ;
- les moyens de pilotage des moyens d'alimentation comprennent des moyens de régulation de l'intervalle estimé sur la consigne d'intervalle ; et
- les moyens de régulation comprennent des moyens formant cartographie auto-adaptative ou des moyens de régulation cycle à cycle ou une combinaison de ceux-ci.

La présente invention a également pour objet un procédé de contrôle du fonctionnement d'un moteur Diesel de véhicule automobile comprenant des moyens d'alimentation en carburant des cylindres de celui-ci selon au moins une injection principale et une injection tardive de carburant en fonction d'une consigne prédéterminée d'intervalle d'angles vilebrequin de séparation de l'injection tardive de l'injection principale, caractérisé en ce qu'il comprend une étape d'estimation de l'intervalle d'angles vilebrequin séparant l'injection tardive de l'injection principale dans au moins un cylindre et une étape de pilotage des moyens d'alimentation pour asservir cet intervalle estimé sur la consigne d'intervalle.

L'invention sera mieux comprise à la lecture de la description qui va suivre, donnée uniquement à titre d'exemple, et faite en relation avec les dessins annexés, dans lesquels :

- la figure 1 est une vue schématique d'un système selon l'invention associé à une unité de propulsion à rampe commune d'alimentation ;
- la figure 2 est un graphique illustrant le dégagement de chaleur dans un cylindre alimenté selon une injection pilote, une injection principale et une injection tardive de carburant ; et
- la figure 3 est un organigramme du fonctionnement du système de la figure 1 illustrant le procédé selon l'invention.

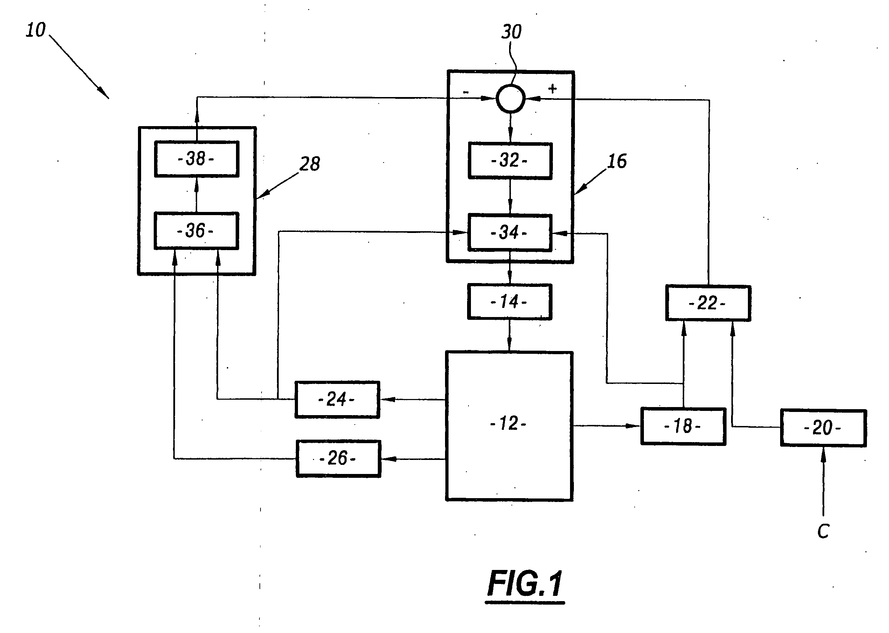

Sur la figure 1, on a illustré de manière schématique un système 10 de contrôle du fonctionnement d'un moteur Diesel 12 de véhicule automobile.

Ce moteur 12 est équipé de moyens 14 à rampe commune d'alimentation en carburant des cylindres de celui-ci. Les moyens 14 d'alimentation sont pilotés par des moyens 16 de contrôle de leur fonctionnement et de traitement d'informations.

Plus particulièrement, les moyens 16 sont propres à piloter les moyens 14 pour que ces derniers alimentent chaque cylindre du moteur 12 selon une injection pilote, une injection principale et au moins une injection tardive lors de la phase de détente du cycle du cylindre.

Le moteur 12 est associé à une chaîne 18 d'acquisition de son régime de rotation et une chaîne 20 d'acquisition du couple moteur souhaité par le conducteur du véhicule, ces chaînes d'acquisition étant connues en soi dans l'état de la technique.

Ces chaînes 18, 20 sont connectées à des moyens 22 formant cartographie comportant une cartographie prédéterminée de consignes d'injections de carburant dans chaque cylindre en fonction de couples de valeurs de régime de rotation et de couple moteur. Ces moyens 22 formant cartographie sont propres à évaluer, pour le régime et le couple acquis par les chaînes 18 et 20, leur cartographie de consignes et délivrer aux moyens 16 de pilotage une consigne correspondante d'injection de carburant dans les cylindres, comme cela est connu en soi dans l'état de la technique.

Plus particulièrement, les moyens 22 formant cartographie sont adaptés pour délivrer en fonction du régime et du couple acquis une consigne d'intervalle d'angles vilebrequin séparant l'injection tardive de l'injection principale.

Le moteur 12 est également associé à des chaînes 24, 26 d'acquisition de l'angle vilebrequin et de la pression dans la chambre de combustion, ou pression cylindre, de chaque cylindre du moteur.

Le système 10 selon l'invention comporte, connectés aux chaînes 24, 26 d'acquisition de l'angle vilebrequin et de la pression cylindre du cylindre et aux moyens 16 de pilotage, des moyens 28 d'estimation de l'intervalle d'angles vilebrequin séparant l'injection tardive de l'injection principale de carburant dans le cylindre, comme cela sera expliqué plus en détail par la suite.

Les moyens 16 de pilotage sont propres à mettre en oeuvre un asservissement de l'intervalle d'angles estimé par les moyens 28 sur la consigne d'intervalle d'angles délivrée par les moyens 22 formant cartographie.

Plus particulièrement, les moyens 16 de pilotage sont propres à mettre en oeuvre une régulation de l'intervalle estimé sur la consigne d'intervalle de sorte que l'intervalle réel d'angles vilebrequin entre l'injection tardive sur l'injection principale est sensiblement égal à la consigne d'intervalle.

Les moyens 16 de pilotage comprennent à cet effet :

- un soustracteur 30 connecté aux moyens 22 et 28 et formant la différence entre la consigne d'intervalle et l'intervalle estimé, ou erreur de régulation ;

- des moyens 32 de régulation connectés au soustracteur 30 et propres à mettant en oeuvre une loi de régulation prédéterminée de l'intervalle estimé sur la consigne d'intervalle et ainsi délivrer en sortie un signal de régulation en fonction de l'erreur de régulation; et

- des moyens 34 de commande, connectés aux moyens 32 de régulation, aux chaînes d'acquisition 24, 18 du régime de rotation du moteur et de l'angle vilebrequin du cylindre et aux moyens 14 d'alimentation. Les moyens 34 de commande sont propres à commander les moyens 14 d'alimentation en fonction des signaux qu'ils reçoivent pour le déclenchement des impulsions de commande d'un injecteur du cylindre, comme cela est connu dans l'état de la technique.

Les moyens 32 de régulation comprennent par exemple une cartographie auto-adaptative et/ou un régulateur cycle à cycle ou une combinaison de ceux-ci. La boucle lente peut, par exemple, comporter une cartographie dite « auto-adaptative » qui permet de stocker et d'actualiser les erreurs d'intervalle en fonction de leur localisation dans le champ moteur défini par exemple par le couple moteur et le régime.

Les moyens 28 d'estimation de l'intervalle d'angles vilebrequin séparant l'injection tardive et l'injection principale comprennent des moyens 36 de calcul du dégagement instantané de chaleur provoqué par la combustion du mélange de carburant et de gaz frais, ou mélange, dans le cylindre lors de la phase de combustion du cycle de celui-ci.

Ce calcul est réalisé par les moyens 36 de calcul à partir du premier principe de la thermodynamique et plus pa$rticulièrement selon la relation :

$$\frac{dQ}{d\alpha} = \frac{1}{k-1} \times \left( V \times \frac{dP}{d\alpha} - k \times P \times \frac{dV}{d\alpha} \right) \qquad (1)$$

où dα est une variation prédéterminée de l'angle vilebrequin α du cylindre, dQ est la quantité de chaleur instantanée dégagée par la combustion du mélange pendant la variation dα de l'angle vilebrequin, V et P sont le volume de la chambre de combustion et la pression dans celle-ci à l'instant de début de la variation dα de l'angle vilebrequin respectivement, le volume V étant par exemple tabulé dans les moyens 36 en fonction de l'angle vilebrequin, dV et dP sont les variations du volume de la chambre de combustion et de la pression dans celle-ci correspondant à la variation dα de l'angle vilebrequin respectivement, et k un coefficient polytropique prédéterminé.

Les moyens 36 de calcul du dégagement de chaleur sont connectés à des moyens 38 d'estimation adaptés pour estimer l'intervalle d'angles vilebrequin séparant l'injection tardive de l'injection principale en fonction du dégagement de chaleur calculé, d'une manière qui sera expliquée plus en détail par la suite.

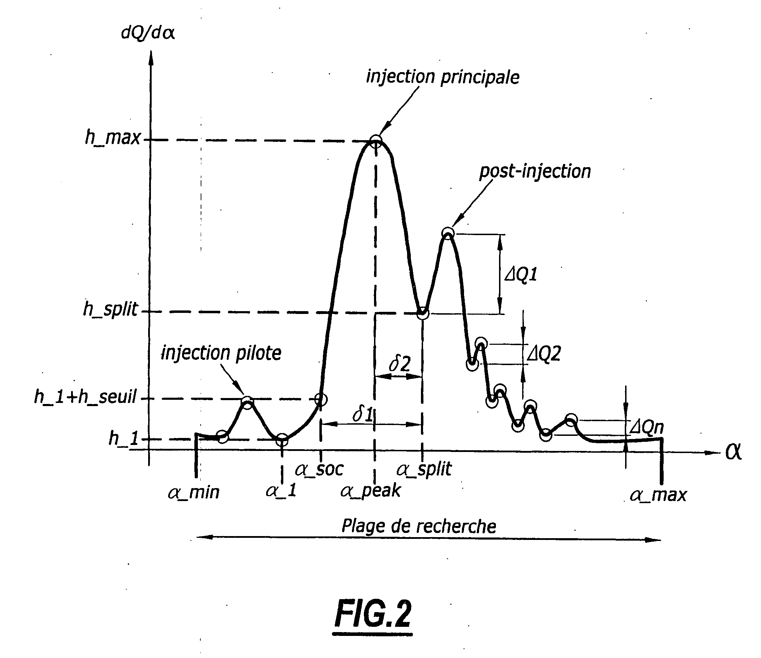

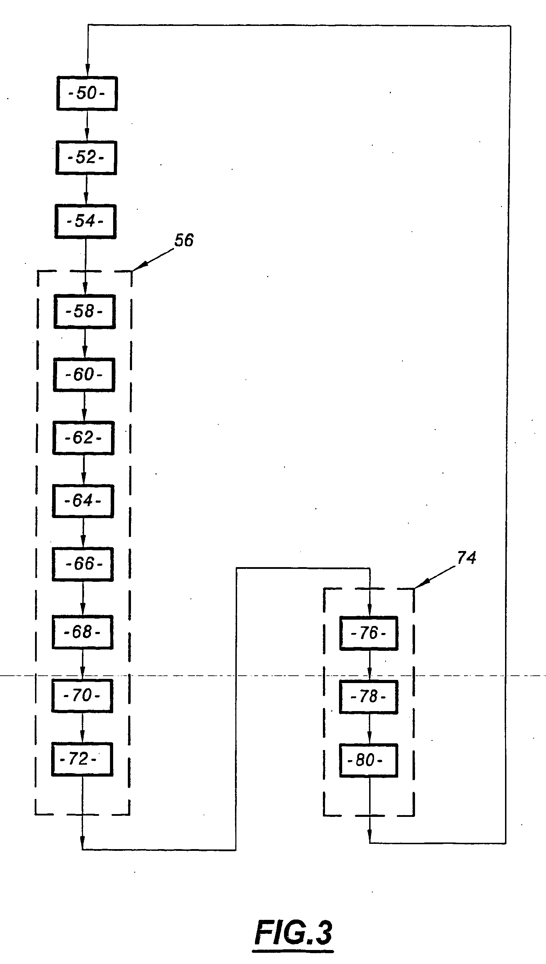

Il va maintenant être décrit en relation avec les figures 2 et 3 le fonctionnement du système selon l'invention et plus particulièrement le fonctionnement des moyens 38 d'estimation.

La figure 2 est un graphique d'une courbe du dégagement de chaleur calculé par les moyens 36 de calcul en fonction de l'angle vilebrequin du cylindre pour une plage prédéterminée d'angles vilebrequin [α_min,α_max] du cylindre dans laquelle se tiennent les injections pilote et principale ainsi que l'injection tardive. Cette plage est par exemple égale à [-20, 90] degrés vilebrequin, le zéro correspondant au point mort haut du cycle du cylindre, et cette plage sera désignée dans la suite de la description par les termes de plage « de recherche ».

En se référant à l'organigramme de la figure 3, dans une étape 50, le régime de rotation du moteur 12 et le couple souhaité par le conducteur sont acquis par les chaînes 18, 20 d'acquisition et une consigne d'intervalle est déterminée par les moyens 22 formant cartographie en fonction de ceux-ci.

Dans une étape 52 suivante, la pression cylindre et l'angle vilebrequin du cylindre sont acquis par les chaînes 24, 36 d'acquisition pour le cycle moteur courant, puis, en 54, le dégagement de chaleur pour la plage de recherche est calculé par les moyens 36 de calcul en fonction de la pression et de l'angle vilebrequin acquis.

Une étape 56 d'estimation de l'intervalle d'angles séparant l'injection tardive de l'injection principale est ensuite déclenchée.

Cette étape 56, mise en oeuvre par les moyens 38 d'estimation, comprend une étape 58 de détermination du maximum h_max du dégagement de chaleur sur la plage de recherche [α_min,α_max] et de son angle vilebrequin correspondant a_peak. Ce maximum global sur la plage [α_min,α_max] correspond au maximum de chaleur dégagée lors de la combustion du mélange issu de l'injection principale.

Ensuite, dans une étape 60, l'ensemble des minima locaux, et leurs positions angulaires correspondantes, sont déterminés sur la plage d'angles [α_min,α_peak]. Par exemple, ces minima et leurs angles vilebrequin sont calculés en déterminant les positions angulaires pour lesquelles la dérivée du dégagement de chaleur calculé par les moyens 36 s'annule et change de signe en passant d'une valeur négative à une valeur positive.

Le minimum parmi les minima déterminés dont la position angulaire α_1 est la plus proche de la position

angulaire $\alpha$_peak du maximum h_max est sélectionné en 62 et la valeur h_1 du dégagement de chaleur pour l'angle $\alpha$_1 est mémorisée.

Un angle vilebrequin $\alpha$_soc du début de la combustion du mélange issu de l'injection principale est ensuite déterminé en 64 en sélectionnant l'angle vilebrequin de la plage [$\alpha$_1,$\alpha$_peak] pour lequel la valeur du dégagement de chaleur est sensiblement égale à la somme h_1+h_seuil de la valeur h_1 du dégagement de chaleur pour l'angle $\alpha$_1 et d'une valeur de seuil h_seuil prédéterminée. La valeur de seuil h_seuil est de préférence comprise entre 0 et 5 J/deg.

Le fonctionnement du système selon l'invention se poursuit ensuite par la détermination de l'angle de début de combustion de l'injection tardive dans une plage d'angles vilebrequin comprenant sensiblement que celle-ci, par exemple la plage [$\alpha$_peak,$\alpha$_max].

Dans un premier temps, un étape 66 de l'étape 56 d'estimation de l'intervalle séparant l'injection tardive de l'injection principale consiste à déterminer l'ensemble des maxima et minima du dégagement de chaleur dans la plage d'angles vilebrequin [$\alpha$_peak,$\alpha$_max].

Ensuite dans une étape 68, pour chaque minimum déterminé en 66, un écart $\Delta Q1$, $\Delta Q2$, ..., $\Delta Qn$ entre le dégagement de chaleur pour ce minimum et le dégagement de chaleur pour le maximum successif et le plus proche de celui-ci est calculé.

Le maximum parmi les écarts $\Delta Q1$, $\Delta Q2$, ... , $\Delta Qn$ ainsi calculés est sélectionné en 70. La position angulaire $\alpha$_split du minimum de l'écart sélectionné correspond à l'angle vilebrequin de début de la combustion dans le cylindre du mélange issu de l'injection tardive.

L'intervalle d'angles vilebrequin séparant l'injection tardive de l'injection principale est alors calculé en 72.

Dans un premier mode de réalisation, l'intervalle séparant ces injections est défini comme étant l'intervalle d'angles vilebrequin $\delta 1$ séparant l'angle $\alpha$_split du début de la combustion du mélange issu de l'injection tardive de l'angle $\alpha$_soc du début de la combustion du mélange issu de l'injection principale. Cet intervalle $\delta 1$ est alors estimé selon la relation $\delta 1 = \alpha$_split-$\alpha$_soc.

Dans un second mode de réalisation, l'intervalle séparant ces injections est défini comme étant l'intervalle d'angles vilebrequin $\delta 2$ séparant l'angle $\alpha$_split du début de la combustion du mélange issu de l'injection tardive de l'angle $\alpha$_peak du maximum de la combustion du mélange issu de l'injection principale. Cet intervalle $\delta 2$ est alors estimé selon la relation $\delta 2 = \alpha$_split - $\alpha$_peak.

Une étape 74 suivante du fonctionnement du système de la figure 1 est une étape de régulation de l'intervalle estimé sur la consigne d'intervalle et est mise en oeuvre par les moyens 16 de pilotage des moyens d'alimentation.

Cette étape 74 comprend une étape 76 de formation par le soustracteur 60 de la différence entre la consigne d'intervalle déterminée en 50 et l'intervalle estimé en 56.

Un signal de régulation est alors calculé en 78 par les moyens 32 de régulation en fonction de cette différence puis délivré aux moyens 34 de commande des moyens 14 d'alimentation.

Les moyens 34 commandent alors en 80 les moyens 14 d'alimentation en fonction du signal de régulation calculé puis l'étape 80 boucle sur l'étape 50 pour un nouveau cycle de calcul.

Ainsi, l'intervalle d'angle vilebrequin séparant l'injection tardive de l'injection principale dans le cylindre est régulé sur la consigne d'intervalle délivrée par les moyens 22 formant cartographie de consignes d'injection.

## Revendications

1. Système de contrôle du fonctionnement d'un moteur Diesel (12) de véhicule automobile équipé de moyens (14) d'alimentation en carburant des cylindres de celui-ci, le système comportant des moyens de pilotage (16) des moyens d'alimentation (14) selon au moins une injection principale et une injection tardive de carburant, **caractérisé en ce qu'**il comprend des moyens (28) d'estimation de l'intervalle d'angles vilebrequin séparant l'injection tardive de l'injection principale dans au moins un cylindre, et **en ce que** les moyens de pilotage (14) sont propres à recevoir une consigne prédéterminée d'intervalle d'angles vilebrequin de séparation de l'injection tardive de l'injection principale, et à asservir l'intervalle estimé sur la consigne d'intervalle prédéterminée.

2. Système selon la revendication 1, **caractérisé en ce qu'**il comprend des moyens (24, 26) d'acquisition de la pression cylindre et de l'angle vilebrequin du au moins un cylindre, et **en ce que** les moyens (28) d'estimation de l'intervalle d'angles vilebrequin séparant l'injection tardive de l'injection principale comprennent des moyens (36) de détermination du dégagement de chaleur provoqué par la combustion du mélange dans le au moins un cylindre en fonction de la pression et de l'angle vilebrequin acquis et des moyens (38) d'estimation de l'intervalle d'angles vilebrequin séparant l'injection tardive de l'injection principale en fonction du dégagement de chaleur déterminé.

3. Système selon la revendication 2, **caractérisé en ce que** les moyens (38) d'estimation de l'intervalle d'angles vilebrequin en fonction du dégagement de chaleur sont propres à déterminer l'angle vilebrequin (a_peak) du maximum (h_max) du dégagement de chaleur déterminée et un angle vilebrequin (α_split) de début de combustion d'un mélange issu de l'injection tardive et à calculer l'intervalle d'angles vilebrequin séparant l'injection tardive de l'injection principale en fonction de la différence entre l'angle vilebrequin (α_split) de début de combustion du mélange issu de l'injection tardive et l'angle (α_*peak*)du maximum (h_max) de dégagement de chaleur déterminés.

**4.** Système selon la revendication 2, **caractérisé en ce que** les moyens (38) d'estimation de l'intervalle d'angles vilebrequin en fonction du dégagement de chaleur sont propres à déterminer un angle vilebrequin (α_soc) de début de combustion d'un mélange issu de l'injection principale dans le au moins un cylindre et un angle vilebrequin (α_split) de début de combustion d'un mélange issu de l'injection tardive et à calculer l'intervalle d'angles vilebrequin séparant l'injection tardive de l'injection principale en fonction de la différence entre l'angle vilebrequin (α_split) de début de combustion du mélange issu de l'injection tardive et l'angle vilebrequin (α_soc) de début de combustion du mélange issu d'injection principale.

**5.** Système selon la revendication 3 ou 4, **caractérisé en ce que** les moyens (38) d'estimation de l'intervalle d'angles vilebrequin en fonction du dégagement de chaleur sont propres à déterminer des minima et des maxima dans un intervalle d'angles vilebrequin comprenant sensiblement uniquement que l'injection tardive et à détecter l'angle vilebrequin (α_split) de début de combustion du mélange issu de l'injection tardive comme étant l'angle du minimum détecté associé au plus grand dégagement de chaleur entre ce minimum et le maximum détecté successif le plus proche.

**6.** Système selon l'une quelconque des revendications précédentes, **caractérisé en ce que** les moyens (16) de pilotage des moyens (14) d'alimentation comprennent des moyens (32) de régulation de l'intervalle estimé sur la consigne d'intervalle.

**7.** Système selon la revendication 6, **caractérisé en ce que** les moyens (32) de régulation comprennent des moyens formant cartographie auto-adaptative ou des moyens de régulation cycle à cycle ou une combinaison de ceux-ci.

**8.** Procédé de contrôle du fonctionnement d'un moteur Diesel (12) de véhicule automobile comprenant des moyens (14) d'alimentation en carburant des cylindres de celui-ci selon au moins une injection principale et une injection tardive de carburant en fonction d'une consigne prédéterminée d'intervalle d'angles vilebrequin de séparation de la injection tardive de l'injection principale, **caractérisé en ce qu'**il comprend une étape (56) d'estimation de l'intervalle d'angles vilebrequin séparant l'injection tardive de l'injection principale dans au moins un cylindre et une étape (74) de pilotage des moyens d'alimentation pour asservir cet intervalle estimé sur la consigne d'intervalle.

**Claims**

**1.** System for controlling the running of a diesel engine (12) of an automotive vehicle, which is equipped with means (14) for supplying cylinders of the said engine with fuel, the system comprising means (16) for managing the supply means (14) in accordance with at least one main injection and one delayed injection of fuel, **characterised in that** it comprises means (28) for estimating the crank angle interval separating the delayed injection from the main injection in at least one cylinder, and **in that** the management means (16) are adapted to receive a predetermined set-point regarding the crank angle interval that separates the delayed injection from the main injection, and to subjugate the estimated interval to the predetermined interval set-point.

**2.** System according to claim 1, **characterised in that** it comprises means (24, 26) for acquiring the cylinder pressure and the crank angle of the at least one cylinder, and **in that** the means (28) for estimating the crank angle interval separating the delayed injection from the main injection comprise means (36) for determining the release of heat brought about by the combustion of the mixture in the at least one cylinder as a function of the pressure and of the crank angle acquired, and means (38) for estimating the crank angle interval separating the delayed injection from the main injection as a function of the release of heat which has been determined.

**3.** System according to claim 2, **characterised in that** the means (38) for estimating the crank angle interval as a function of the release of heat are adapted to determine the crank angle ($_{α\_peak}$) at the maximum ($_{h−max}$) of the release of heat determined, and a crank angle ($_{α\_split}$) at the start of combustion of a mixture originating from the delayed injection, and to calculate the crank angle interval separating the delayed injection from the main injection as a function of the difference between the crank angle ($_{α\_split}$) at the start of combustion of the mixture originating from the delayed injection and the angle ($_{α\_peak}$) at the maximum ($_{h\_max}$) of the release of heat that have been determined.

**4.** System according to claim 2, **characterised in that** the means (38) for estimating the crank angle interval as a function of the release of heat are adapted to determine a crank angle ($\alpha_{soc}$) at the start of combustion of a mixture originating from the main injection in the at least one cylinder and a crank angle ($\alpha_{split}$) at the start of combustion of' a mixture originating from the delayed injection, and to calculate the crank angle interval separating the delayed injection from the main injection as a function of the difference between the crank angle ($\alpha_{split}$) at the start of combustion of the mixture originating from the delayed injection and the crank angle ($\alpha_{soc}$) at the start of combustion of the mixture originating from the main injection.

**5.** System according to claim 3 or 4, **characterised in that** the means (38) for estimating the crank angle interval as a function of the release of heat are adapted to determine minima and maxima within a crank angle interval substantially comprising solely the delayed injection, and to detect the crank angle ($\alpha_{split}$) at the start of combustion of the mixture originating from the delayed injection as being the angle of the detected minimum associated with the greatest release of heat between the said minimum and the closest successive detected maximum.

**6.** System according to any of the preceding claims, **characterised in that** the means (16) for managing the supply means (14) comprise means (32) for adjusting the estimated interval to the interval set-point.

**7.** System according to claim 6, **characterised in that** the adjusting means (32) comprise means forming auto-adaptive cartography or cycle-to-cycle adjusting means or a combination of these.

**8.** Method of controlling the running of a diesel engine (12) of an automotive vehicle, comprising means (14) for supplying cylinders of the said engine with fuel in accordance with at least one main injection and one delayed injection of fuel as a function of a predetermined set-point for the crank angle interval separating the delayed injection from the main injection, **characterised in that** the said method comprises a stage (56) that estimates the crank angle interval separating the delayed injection from the main injection in at least one cylinder, and a stage (74) that manages the supply means in order to subjugate the said estimated interval to the interval set-point.

**Patentansprüche**

**1.** System zur Steuerung der Funktionsweise eines Dieselmotors (12) eines Kraftfahrzeugs, der mit Mitteln (14) zur Versorgung der Zylinder desselben mit Kraftstoff ausgerüstet ist, wobei das System Mittel (16) zur Steuerung der Versorgungsmittel (14) gemäß mindestens einer Haupteinspritzung und einer Nacheinspritzung von Kraftstoff umfasst, **dadurch gekennzeichnet, dass** es Mittel (28) zur Schätzung des Kurbelwinkelintervalls umfasst, das die Nacheinspritzung von der Haupteinspritzung in mindestens einem Zylinder trennt, und dass die Mittel (14) zur Steuerung geeignet sind, einen vorbestimmten Sollwert des Kurbelwinkelintervalls zur Trennung der Nacheinspritzung von der Haupteinspritzung zu empfangen und das geschätzte Intervall auf den Sollwert des vorbestimmten Intervalls zu regeln.

**2.** System nach Anspruch 1, **dadurch gekennzeichnet, dass** es Mittel (24, 26) zur Beschaffung des Zylinderdrucks und des Kurbelwinkels des mindestens einen Zylinders umfasst und dass die Mittel (28) zur Schätzung des Kurbelwinkelintervalls, das die Nacheinspritzung von der Haupteinspritzung trennt, Mittel (36) zur Bestimmung der Wärmeabgabe, die durch die Verbrennung des Gemischs in dem mindestens einen Zylinder abhängig von dem beschafften Druck und dem beschafften Kurbelwinkel hervorgerufen, wird und Mittel (38) zur Schätzung des Kurbelwinkelintervalls, das die Nacheinspritzung von der Haupteinspritzung trennt, abhängig von der bestimmten Wärmeabgabe einschließen.

**3.** System nach Anspruch 2, **dadurch gekennzeichnet, dass** die Mittel (38) zur Schätzung des Kurbelwinkelintervalls abhängig von der Wärmeabgabe geeignet sind, den Kurbelwinkel ($\alpha_{peak}$) des Maximums (h_max) der bestimmten Wärmeabgabe und einen Kurbelwinkel ($\alpha_{split}$) des Beginns der Verbrennung des bei der Nacheinspritzung abgegebenen Gemischs zu bestimmen und das Kurbelwinkelintervall, das die Nacheinspritzung von der Haupteinspritzung trennt, abhängig von der Differenz zwischen dem Kurbelwinkel ($\alpha_{split}$) des Beginns der Verbrennung des bei der Nacheinspritzung abgegebenen Gemischs und dem Winkel ($\alpha_{peak}$) des Maximums ($h_{max}$) der vorbestimmten Wärmeabgabe zu berechnen.

**4.** System nach Anspruch 2, **dadurch gekennzeichnet, dass** die Mittel (38) zur Schätzung des Kurbelwinkelintervalls abhängig von der Wärmeabgabe geeignet sind, einen Kurbelwinkel ($\alpha_{soc}$) des Beginns der Verbrennung eines bei der Haupteinspritzung abgegebenen Gemischs in den mindestens einen Zylinder und einen Kurbelwinkel ($\alpha_{split}$) des Beginns der Verbrennung eines bei der Nacheinspritzung abgegebenen Gemischs zu bestimmen und das Kurbelwinkelintervall, das die Nacheinspritzung von der Haupteinspritzung trennt, in Abhängigkeit von der Differenz zwischen dem Kurbelwinkel ($\alpha_{split}$) des Beginns der Verbrennung des für die Nacheinspritzung ausgegebenen Gemischs und den Kurbelwinkel ($\alpha_{soc}$) des Beginns der Verbrennung des für die Haupteinspritzung ausgegebenen Gemischs zu berechnen.

5. Systems nach Anspruch 3 oder 4, **dadurch gekennzeichnet, dass** die Mittel (38) zur Schätzung des Kurbelwinkelintervalls in Abhängigkeit von der Wärmeabgabe geeignet sind, Minima und Maxima in dem Kurbelwinkelintervall, das im Wesentlichen nur die Nacheinspritzung umfasst, zu bestimmen und den Kurbelwinkel ($\alpha_{split}$) des Beginns der Verbrennung des für die Nacheinspritzung ausgegebenen Gemischs als den Winkel des detektierten Minimums zu detektieren, der der größten Wärmeabgabe zwischen diesem Minimum und dem darauf folgenden am nächsten liegenden detektierten Maximum zugeordnet ist.

6. System nach einem beliebigen der vorhergehenden Ansprüche, **dadurch gekennzeichnet, dass** die Mittel (16) zur Steuerung der Versorgungsmittel (14) Mittel (32) zum Regeln des geschätzten Intervalls auf den Intervallsollwert umfassen.

7. System nach Anspruch 6, **dadurch gekennzeichnet, dass** die Mittel (32) zum Regeln Mittel, die ein selbstadaptierendes Kennfeld bilden, oder Mittel zur Regelung Takt um Takt oder eine Kombination derselben umfassen.

8. Verfahren zur Steuerung der Funktionsweise eines Dieselmotors (12) eines Kraftfahrzeugs, der Mittel (14) zur Versorgung der Zylinder desselben gemäß mindestens einer Haupteinspritzung und einer Nacheinspritzung mit Kraftstoff abhängig von einem vorbestimmten Sollwert des Kurbelwinkelintervalls zur Trennung der Nacheinspritzung von der Haupteinspritzung umfasst, **dadurch gekennzeichnet, dass** es einen Schritt (56) zur Schätzung des Kurbelwinkelintervalls, das die Nacheinspritzung von der Voreinspritzung in mindestens einen Zylinder und einen Schritt (74) zur Steuerung der Versorgungsmittel umfasst, um dieses geschätzte Intervall auf den Intervallsollwert zu regeln.

**FIG.1**

EP 1 731 740 B1

**FIG.2**

**FIG.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004022959 A
- JP 2004100567 B
- JP 11125141 B
- EP 0889220 A